# EUROPEAN PATENT APPLICATION

(11) **EP 4 105 846 A1**
(43) Date of publication of application: **21.12.2022**
(21) Application number: 21179671.9
(22) Date of filing: 16.06.2021
(51) Int. Cl.: G06N 20/00, G06N 3/08, G06Q 10/06

(54) **VERIFICATION COMPONENT FOR VERIFYING AN ARTIFICIAL INTELLIGENCE, AI, MODEL**

(71) Applicant: Siemens Aktiengesellschaft, 80333 München (DE)
(72) Inventor: Büttner, Florian, 81541 München (DE); Nehrkorn, Johannes, 91096 Möhrendorf (DE); Ochsenfeld, Henning, 90491 Nürnberg (DE); Scepanski, Erik, 90402 Nürnberg (DE); Waltinger, Ulli, 86633 Neuburg (DE); Yang, Yinchong, 85579 Neubiberg (DE)

(57) **Abstract**

The invention is directed to a verification component for verifying an artificial intelligence, AI, model, wherein: a.
the verification component is configured for receiving an input data set comprising the AI model to be verified, associated model data and application data; wherein b. the verification component is configured for determining at least one risk assessment score using at least one verification suite based on the input data set; wherein c. the verification component is configured for determining at least one Key Performance Indicator, KPI, by means of monitoring the performance of the AI model based on the input data set; wherein d. the verification component is configured for determining a validity of the AI model as at least one verification score based on the at least one risk assessment score and/or the at least one KPI; and wherein e.the verification component is configured for providing the at least one verification score and/or the verified AI model as output data set.

Further, the invention relates to a computer-implemented method and a computer program product.

## Description

### 1. Technical field

The present invention relates to a verification component for verifying an artificial intelligence, AI, model. Further, the invention relates to a corresponding computer-implemented method and a corresponding computer program product.

### 2. Prior art

Currently there is a trend of digitalization in the industry domain. Hence, e.g. a manufacturing process for a product may be digitally controlled. For describing several facets of this trend the term "Industry 4.0" (in German: "Industrie 4.0") is a commonly used term. It has become not only a major part of today's industry, but it also drives the business in many industrial domains.

Considering complex industrial plants, the industrial plants usually comprise distinct components, parts, modules or units with a multiplicity of individual functions. Exemplary units include sensors and actuators. The units and their functions have to be controlled and regulated in an interacting manner. They are often monitored, controlled and regulated by automation systems, for example the Simatic system of Siemens AG. The increasing degree of digitalization allows for e.g. manufacturing or industrial installation of products in a production line of the industrial plant to be performed by robot units or other autonomous units in an automatic manner and thus efficiently at least in part up to now.

A reliable and robust operation of the machinery is of importance in such industrial environments as OT environments since any uncertainty or defect often has a negative impact such as a decrease of quality, throughput and/or availability, also leads to personal harms in the worst case.

Hence, the Artificial Intelligence ("AI") models deployed and operated on the industrial environments for e.g. control, production or monitoring processes have to be "industrial-graded". This means the AI models have to be reliable and robust, even though, the conditions around its application scenario may change such as lightning or positioning.

This is a challenging task since AI models are usually data- and context-centric since the AI models are trained based on an estimate of data how the real application scenario may look like, and second, the algorithmic sketches, such as neural networks, are referred to black-box models, as it is, due to their non-linearity nature, hard to "look inside" - it is tough to provide explainability. In other words, it is from outside difficult to estimate, if certain predictions of the algorithms are somehow performed on a robust and reliable application context or due to some spurious correlation within.

This uncertainty in the IT-OT connection - if predictions and controls of an AI-driven software component are reliable and robust enough for the OT operation, poses a significant risk to the operator, the factory site and to customer decisions.

Prior art approaches are intended to be used as decision support, putting the domain expert in charge of also analyzing the technical robustness of AI models. The disadvantage, however, is that it remains a challenge in terms of expertise and transparency. Moreover, the approaches are time-consuming and susceptibility to errors.

It is therefore an objective of the invention to provide a verification component for verifying an artificial intelligence, AI, model in an efficient and a reliable manner.

### 3. Summary of the invention

This problem is according to one aspect of the invention solved by a verification component for verifying an artificial intelligence, AI, model, wherein:
a. the verification component is configured for receiving an input data set comprising the AI model to be verified, associated model data and application data; wherein
b. the verification component is configured for determining at least one risk assessment score using at least one verification suite based on the input data set; wherein
c. the verification component is configured for determining at least one Key Performance Indicator, KPI, by means of monitoring the performance of the AI model based on the input data set; wherein
d. the verification component is configured for determining a validity of the AI model as at least one verification score based on the at least one risk assessment score and/or the at least one KPI; and wherein
e. the verification component is configured for providing the at least one verification score and/or the verified AI model as output data set.

Accordingly, the invention is directed to a verification component as technical component. The verification component is suitable for verification of an artificial intelligence, AI, model.

First, the verification component provides an input data set. The input data set comprises the AI model to be verified. The AI model can be designed as machine learning model, such as supervised machine learning model.

Additionally, the input data set comprises associated model data and application data. Thereby, the associated model data can comprise e.g. data related to the AI model such as model parameter. The application data can comprise data or labeled data. Labeled data are data samples or data items, wherein the data samples are tagged with one or more labels. Exemplary data samples or data items are images, text files, videos etc.

In a further step, after receiving the input data set, the verification component determines one or more risk assessment scores. Therefore, one or more verification suites are applied on the received input data set.

In a further step, the verification component determines one or more Key Performance Indicators, KPIs. Therefore, the performance of the AI model is monitored on the basis of the input data set.

The verification component uses the determined at least one risk assessment score and/or the at least one KPI to verify the AI model. Hence, the risk assessment score can be solely used to verify the AI model. Preferably, additionally, one or more KPIs can be considered.

Then, in the last step, the validity of the AI model and/or the verified AI model is outputted by the verification component as output data set.

Thereby, the risk assessment score, the KPI and/or the verification score can be provided as numerical values.

In other words, the provided AI models are used as input, within the verification component to perform a verification process, comprising the risk assessment and model monitoring. The verification component outputs the validity that the AI model can be used and guaranteed e.g. in a specific industrial context in form of the verification score. The verification process utilizes one or more verification suites, preferably a set of verification suites, resulting in the validity of the AI model as output.

The advantage of the present invention is that any AI model from the IT environment, deployed or operated on the OT environment, such as operated on an industrial plant, can be verified in an efficient and reliable manner by the verification component. The verification component is a separate, independent and/or autonomous component, decoupled from the IT and OT environments. This way, the verification component can be applied on the input data set in a flexible manner depending on the underlying technical system, user requirements and any other terms and conditions.

Moreover, any dataset-drifts or -shifts the AI model is faced with (e.g. change in lighting conditions, change in consumer base, etc.) during operation in the OT environment can be handled or post-processed by the verification component after deployment of the AI model. This verification results in a verified and thus significantly improved AI model. The improved AI model can be re-deployed and re-operated on the OT environment after verification, reducing failures and downtimes in the OT environment, such as the aforementioned industrial plant.

In one aspect, the verification component is designed as a technical component, preferably a container or a virtual machine.

In another aspect, the verification component comprises at least one interface, wherein the at least one interface is

an input interface for receiving the input data set; and/or an output interface for providing the output data set.

In another aspect, the verification component comprises at least one subcomponent, wherein the at least one subcomponent is

a risk assessment component configured for determining the at least one risk assessment score using the at least one verification suite based on the input data set; and/or

a model monitoring component for determining the at least one Key Performance Indicator, KPI, by means of monitoring the performance of the AI model based on the input data set.

Accordingly, the verification component can comprise interfaces and/or subcomponents or units. The interfaces can be designed for bidirectional data exchange and communication.

In another aspect, the verification component is installed and/or deployed on a cloud, an edge device or another computing unit, preferably as middleware between an Information Technology, IT, environment and an Operational Technology, OT, environment.

In another aspect, the AI model is a machine learning model, preferably a neural network.

In another aspect, the AI model is represented in a standard exchange format, preferably ONNX.

Accordingly, the verification component can be designed as middleware for the use of an industrial-grade verification of AI components for the OT operation. The verification component can be instantiated as a middleware sandbox environment or middleware between the IT and OT environment. The verification component can be installed and/or deployed on a cloud, an edge, as well as an independent 3rd party environment.

The advantage is that the verification component enables the IT layer to provide the individual AI models, which are represented in a standard exchange format (i.e. ONNX). This also enables the AI provider ecosystem (i.e. startups, technology provider, OEMs, customers) to provide AI models to be used on the OT environment.

In another aspect, the at least one verification suite is a suite or audit, selected from the group comprising:
adversarial suite, calibration suite, performance suite, embedded suite, deployment suite, simulation suite, data suite, environment audit and standardization audit.

In another aspect, the determination of the validity of the AI model based on the at least one risk assessment score and/or the at least one KPI depends on a predefined threshold.

In another aspect, the verification component after determination of validity is further configured for:
- Transmitting the at least one verification score and/or the verified AI model to a computing unit of the Operational Technology, OT, environment or a technical component of the Operational Technology, OT, environment, for installation, deployment and/or operation;
- Releasing the verified AI model for the Operational Technology, OT, environment, for installation, deployment and/or operation; and/or
- Transmitting the output data set and/or related data comprising the input data set, the at least one risk assessment score, the at least one KPI and/or a digital message regarding the verified AI model to any computing unit or technical component for further processing.

A further aspect of the invention is a computer-implemented method for verifying an artificial intelligence, AI, model, comprising the steps:
a. receiving an input data set comprising the AI model to be verified, associated model data and application data; wherein
b. determining at least one risk assessment score using at least one verification suite based on the input data set; wherein
c. determining at least one Key Performance Indicator, KPI, by means of monitoring the performance of the AI model based on the input data set; wherein
d. determining a validity of the AI model as at least one verification score based on the at least one risk assessment score and/or the at least one KPI; and wherein
e. providing the at least one verification score and/or the verified AI model.

A further aspect of the invention is a computer program product directly loadable into an internal memory of a computer, comprising software code portions for performing the aforementioned method steps when said computer program product is running on a computer

### 4. Short description of the drawings

In the following detailed description, presently preferred embodiments of the invention are further described with reference to the following figures:
- Fig. 1: shows a schematic representation of the verification component according to an embodiment.
- Fig. 2: shows a schematic representation of the verification component according to an embodiment.
- Fig. 3: illustrates a flowchart of the computer-implemented method according to the invention.

### 5. Detailed description of preferred embodiments

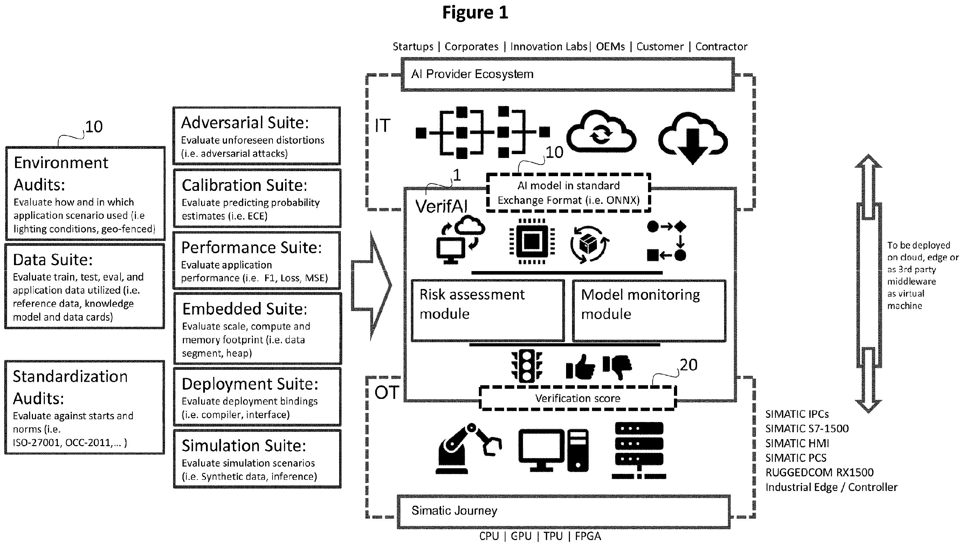

Figure 1 illustrates a schematic representation of the verification component 1 according to an embodiment. The verification component can is abbreviated with "VerifAI" in the following. The verification component 1 is designed as middleware between the IT and OT environment.

### Risk assessment

The verification component 1 determines at least one risk assessment score using at least one verification suite based on the input data set 10. In other words, a risk assessment is conducted. The risk assessment results in the risk assessment score.

### Model monitoring

Moreover, the verification component 1 determines at least one Key Performance Indicator, KPI, by means of monitoring the performance of the AI model 10 based on the input data set 10. In other words, real-time application actions (i.e. logs, streams) are evaluated. One or more KPIs are calculated during model monitoring, for example during OT operation (as the deployed AI Model is operated in the OT domain).

Therefore, the verification component 1 can comprise two or more subcomponents, modules and/or interfaces. According to an embodiment, the verification component comprises two modules, the risk assessment module and the model monitoring module. The modules can be initialized before and/or throughout the operation.

Exemplary verification suites are listed in the following and depicted on the left side of Figure 1:
Adversarial suite:
   a set of methods with crafted adversarial examples (i.e. using fast gradient sign, Jacobian-based saliency map) to evaluate unforeseen distortions
Calibration suite:
   a set of prediction probability estimate methods (i.e. expected calibration error) to evaluate domain-shift robustness
Performance suite:
   a set of methods to evaluate the application performance of the model (i.e. F1 Measure, Accuracy, Loss, MSE)
Embedded suite:
   a set of methods to assess the scalability, compute need, and memory footprint of the deployed object (i.e. data segment, memory allocation, heap, processor)
Deployment suite:
   a set of definitions, processing steps, and representations to which the AI model 10 will be deployed to (i.e. compiler, interfaces, architecture)
Simulation suite:
   a set of simulation environments to test the AI Model 10 on inference and train with synthetic data
Data suite:
   a set of reference data and application data models to assess the performance of the AI model (i.e. data from the real-world application to be deployed, data from reference deployments)
Environment audit:
   a set of reference data and model representations to assess the application scenario complexity (i.e. lighting conditions, angle, data resolution)
Standardization audit:
   a set of standards and norm definitions to evaluate against (i.e. ISO-270001, OCC-2011)

An Eexemplary input data set comprises the following data:
AI model:
   as a Machine Learning or a Neural Network Model represented in a standard exchange format (i.e. ONNX)
Model card:
   as a definition on what and how the AI model has been constructed, evaluated, tuned and potential limitations (e.g. a training protocol including all the hyper parameters, epoch-wise loss development, reason for training stop, etc.)
Application data:
   as a representation of the domain and application data to be used in OT
Scenario card:
   as a definition of the application scenario an OT setup
Deployment card:
   as a definition of the deployment characteristics in the OT application

Before operation, it is not clear what type of dataset-drift or dataset-shifts the AI model will be faced with (e.g. change in lighting conditions, change in consumer base, etc.).

The verification component 10 provides a comprehensive simulation toolkit that can simulate a wide range of dataset shifts, where each simulated shift corresponds to a real-world scenario. Simulated shifts include for example gradually increasing perturbations and corruptions of images. These gradual shifts simulate scenarios where the distribution of the data seen by a deployed model changes slowly and continuously over time. More specifically, image alterations based on speckle noise or affine transformations such as xy-zoom can be used. Modality-agnostic scenarios can be created based on the gradient-sign method. Thereby, a generic domain shift is simulated by computing the gradient of the model wrt each input. Then Gaussian noise is added in the direction of the gradient with increasing strength. These simulated shifts are computed based on the application data and/or other data, maintaining the original labels. Model performance in terms of e.g. F1 score, NLL, etc. as well as model calibration in terms of the expected calibration error can then be computed at all levels of the simulated gradual domain shifts. This results in a comprehensive risk assessment before deployment.

Risk and performance monitoring can also be performed during operation. The challenge of continuous performance monitoring during operation is that meaningful performance metrics (such as accuracy, precision, recall etc.) require not only model input and output, but also ground truth labels - while available for the training and/or validation data, labels are typically not observed during operation.

However, the concept of calibration can be used to obtain meaningful performance estimates without labels. Model calibration means that the confidence scores generated by a classifier alongside a prediction match model accuracy for all levels of confidence. For example, if a classifier makes 100 predictions with a confidence score between 0.8 and 0.85, then - in the case of a well-calibrated classifier - we can infer that between 80 and 85 of those 100 predictions are correct, without the need to know ground truth labels.

The verification component leverages this powerful concept by building on recent work on post-hoc calibration under domain shift. More specifically, the output of standard classifiers (typically uncalibrated) are post-processed internally by the verification component using these methods such that calibrated predictions are obtained. These re-calibrated predictions are then used to generate real-time performance estimates during operation without the need for ground truth labels.

Hence, the verification component is provided as a managed service that reduces the risk of the customers deployment and allows the AI partners to contribute the ecosystem by means of providing value-added AI & ML models, but also by providing contribution of models and metrics to the risk assessment module.

### Use Case "welding quality detection" in the automotive industry

The quality of the welds has to be determined by adequate testing procedures on shopfloor to ensure the satisfactory performance of a welded structure according the use case. Therefore, historic data can be utilized from the shopfloor to provide a visual monitoring of defects. The OT infrastructure involves various providers around the Sinematic Journey. After the AI model will be deployed on shopfloor, it will re-prioritize rework processes, in which wrong decisions as well as instability or defects directly have a negative impact on the business value.

The verification component ensures that the deployed AI model runs under industrial-grade specifications in terms of e.g. reliability, stability and performance. The time-consuming continuous and close monitoring as wells as interaction with the technology provider and third party staffing according to prior art can be prevented.

Hence, the verification component can be used to determine a verified AI model on shopfloor usage, which also mitigates the risk of downtimes.

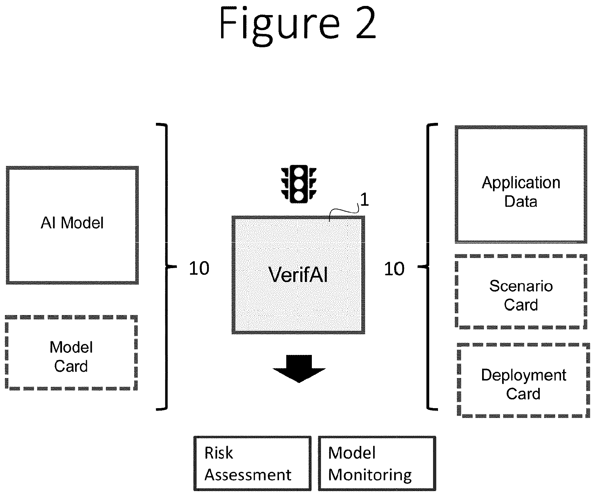

Fig. 2 illustrates a schematic representation of the verification component according to an embodiment.

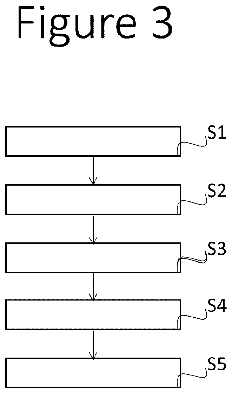

Figure 3 illustrates a flowchart of the method according to the invention with the method steps S1 to S5.

### Reference signs

- S1 to S5: Method steps 1 to 5
- 1: verification component
- 10: input data set, AI model, application data
- 20: verification score

## Claims

1. Verification component (1) for verifying an artificial intelligence, AI, model, (10) wherein:
a. the verification component (1) is configured for receiving an input data set comprising the AI model (10) to be verified, associated model data and application data; wherein
b. the verification component (1) is configured for determining at least one risk assessment score using at least one verification suite based on the input data set; wherein
c. the verification component (1) is configured for determining at least one Key Performance Indicator, KPI, by means of monitoring the performance of the AI model based on the input data set; wherein
d. the verification component (1) is configured for determining a validity of the AI model (10) as at least one verification score based on the at least one risk assessment score and/or the at least one KPI; and wherein
e. the verification component (1) is configured for providing the at least one verification score (20) and/or the verified AI model (10) as output data set.

2. Verification component (1) according to claim 1, wherein the verification component (1) is designed as a technical component, preferably a container or a virtual machine.

3. Verification component (1) according to claim 1 or claim 2, wherein the verification component (1) comprises at least one interface, wherein the at least one interface is
an input interface for receiving the input data set; and/or
an output interface for providing the output data set.

4. Verification component (1) according to any of the preceding claims, wherein the verification component (1) comprises at least one subcomponent, wherein the at least one subcomponent is
a risk assessment component configured for determining the at least one risk assessment score using the at least one verification suite based on the input data set; and/or
a model monitoring component configured for determining the at least one Key Performance Indicator, KPI, by means of monitoring the performance of the AI model based on the input data set.

5. Verification component (1) according to any of the preceding claims, wherein the verification component (1) is installed and/or deployed on a cloud, an edge device or another computing unit, preferably as middleware between an Information Technology, IT, environment and an Operational Technology, OT, environment.

6. Verification component (1) according to any of the preceding claims, wherein the AI model is a machine learning model, preferably a neural network.

7. Verification component (1) according to any of the preceding claims, wherein the AI model is represented in a standard exchange format, preferably ONNX.

8. Verification component (1) according to any of the preceding claims, wherein the at least one verification suite is a suite or audit, selected from the group comprising:
adversarial suite, calibration suite, performance suite, embedded suite, deployment suite, simulation suite, data suite, environment audit and standardization audit.

9. Verification component (1) according to any of the preceding claims, wherein the determination of the validity of the AI model based on the at least one risk assessment score and/or the at least one KPI depends on a predefined threshold.

10. Verification component (1) according to any of the preceding claims, wherein the verification component after determination of validity is further configured for:
- Transmitting the at least one verification score and/or the verified AI model to a computing unit of the Operational Technology, OT, environment or a technical component of the Operational Technology, OT, environment, for installation, deployment and/or operation;
- Releasing the verified AI model for the Operational Technology, OT, environment, for installation, deployment and/or operation; and/or
- Transmitting the output data set and/or related data comprising the input data set, the at least one risk assessment score, the at least one KPI and/or a digital message regarding the verified AI model to any computing unit or technical component for further processing.

11. Computer-implemented method for verifying an artificial intelligence, AI, model, comprising the steps:
a. receiving an input data set comprising the AI model to be verified, associated model data and application data (S1); wherein
b. determining at least one risk assessment score using at least one verification suite based on the input data set (S2); wherein
c. determining at least one Key Performance Indicator, KPI, by means of monitoring the performance of the AI model based on the input data set (S3); wherein
d. determining a validity of the AI model as at least one verification score based on the at least one risk assessment score and/or the at least one KPI (S4); and wherein
e. providing the at least one verification score and/or the verified AI model as output data set (S5) .

12. A computer program product directly loadable into an internal memory of a computer, comprising software code portions for performing the steps according to claim 11 when said computer program product is running on a computer.
